# EUROPEAN PATENT SPECIFICATION

(11) **EP 3 505 411 B1**
(45) Date of publication and mention of the grant of the patent: **18.05.2022**
(21) Application number: 17860562.2
(22) Date of filing: 09.08.2017
(51) Int. Cl.: B60W 10/06, B60K 6/46, B60W 20/13, B60W 20/50

(54) **POWER SOURCE FOR ELECTRIC VEHICLE AND POWER SOURCE SELECTION METHOD**
STROMQUELLE FÜR EIN ELEKTROFAHRZEUG UND VERFAHREN ZUR AUSWAHL EINER STROMQUELLE
SOURCE D'ALIMENTATION POUR VÉHICULE ÉLECTRIQUE ET PROCÉDÉ DE SÉLECTION DE SOURCE D'ALIMENTATION

(30) Priority: 11.10.2016 CN 201610887313
(43) Date of publication of application: 03.07.2019
(73) Proprietor: Zhejiang Geely New Energy Commercial Vehicles Co., Ltd., Hangzhou, Zhejiang 310051 (CN); Zhejiang Geely Holding Group Co., Ltd., Zhejiang 310051 (CN)
(72) Inventor: XU, Xiuhua, Taizhou Zhejiang 317000 (CN); CAI, Wenyuan, Taizhou Zhejiang 317000 (CN); TONG, Guoqing, Taizhou Zhejiang 317000 (CN); WANG, Yirong, Taizhou Zhejiang 317000 (CN); CHEN, Dingbang, Taizhou Zhejiang 317000 (CN)
(74) Representative: Ziebig & Hengelhaupt Patent- und Rechtsanwaltskanzlei PartG mbB
(86) International application number: PCT/CN2017/096655
(87) International publication number: WO 2018/068569

(56) References cited:
- WO-A1-2013/044357
- WO-A1-2016/053786
- CN-A- 101 522 494
- CN-A- 104 163 114
- CN-A- 104 393 355
- CN-A- 105 799 694
- CN-A- 105 922 986
- CN-A- 106 347 145
- CN-A- 106 347 358
- CN-A- 106 541 940
- JP-A- 2012 101 616
- US-A1- 2016 090 081
- US-B2- 6 814 170

## Description

### TECHNICAL FIELD

The invention relates to the field of energy management and control of electric vehicles, in particular to a power source for an electric vehicle and a power source selection method.

### BACKGROUND OF THE INVENTION

In order to improve the driving range performance of an electric vehicle, a power follower capable of increasing the driving range is installed in the extended-range electric vehicle. The power follower comprises an engine and an electric generator, and the power follower can not only charge a power battery, but also directly drive a traction motor, for example, a fuel cell engine, an internal combustion engine and the like. The principle that the power follower increases the driving range performance of the electric vehicle is: when the power battery is fully charged, the vehicle is running in an electric-only mode; and when the battery power is low, the power follower starts to work to charge the power battery or directly drive the traction motor, thus greatly increasing the mileage of the electric vehicle.

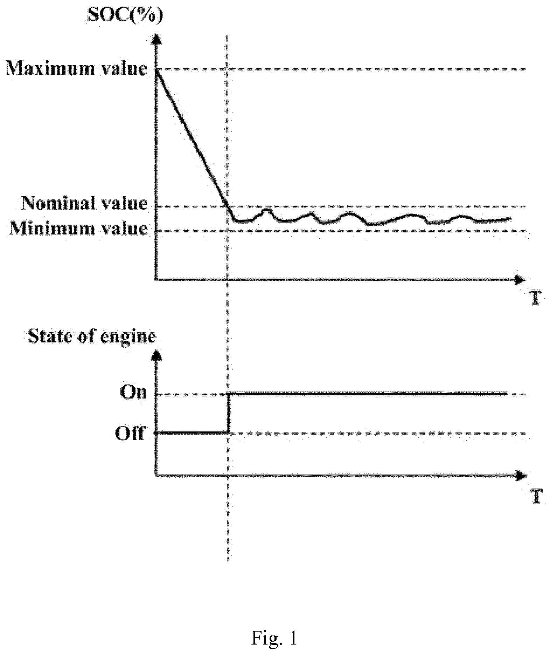

For the power follower in the prior art, the control strategy of the energy source is that the power follower is used as a main energy source, while the power battery is used as an auxiliary backup energy source. Fig. 1 shows a schematic diagram of a control strategy between a power follower and a power battery in the prior art. It can be seen from Fig. 1 that, when the battery power is reduced to a nominal value, the engine in the power follower is activated to drive the motor, the battery discharge for driving the motor is stopped, and at the same time the battery is charged. Although this control strategy has the advantages of small battery capacity, light weight, low battery charge and discharge frequency, low energy loss, long service life and the like, since only the power follower is used as the main energy source once the battery power is reduced to a certain value, this control strategy has high fuel consumption and poor energy-saving performance.

From JP 2012 101616 A, it is known to compute the mileage of a vehicle based on an SOC of a battery and a fuel remaining quantity of a fuel tank.

Further, WO 2013/044357 A1 describes a vehicle with a battery to drive a motor and with a range extender system to support the battery.

### SUMMARY OF THE INVENTION

An object of the present invention is to provide a power source for an electric vehicle to solve the problems in the prior art, such as short battery life, and high fuel consumption and poor energy-saving performance due to the use of a power follower as an energy source.

A first aspect of the invention refers to a power source for an electric vehicle, the power source comprising:
a power battery used to output electric power as a main energy source to drive a traction motor of the electric vehicle;
an auxiliary energy apparatus used to output electric power as an auxiliary energy source to selectively drive the traction motor of the electric vehicle and/or charge the power battery; and
a controller used to select any one mode to control the operation of the power battery and the auxiliary energy apparatus from multiple driving modes, wherein the multiple driving modes comprise:
   a first driving mode, in which the power battery operates alone to drive the traction motor; and
   a second driving mode, in which the auxiliary energy apparatus operates alone to drive the traction motor and to charge the power battery; and
   wherein the controller is configured to: select, when the remaining electric quantity of the power battery is not greater than a pre-set nominal value and greater than a minimum pre-set value, the second driving mode until the remaining electric quantity of the power battery rises to a value which is not lower than a pre-set intermediate value; and select, when the remaining electric quantity of the power battery is not lower than the pre-set intermediate value, the first driving mode until the remaining electric quantity of the power battery is reduced to a value which is not greater than the pre-set nominal value and greater than the minimum pre-set value, wherein the power battery has a maximum pre-set value which indicates that the power battery is substantially in a fully charged state, and the pre-set intermediate value is a value which is between the maximum pre-set value and the pre-set nominal value.

According to the invention, the multiple driving modes further comprise:
a third driving mode, in which the power battery and the auxiliary energy apparatus both output electric power to simultaneously drive the traction motor;
wherein the controller is configured to select the third driving mode when the instantaneous power demand of the electric vehicle cannot be satisfied when the current driving mode is the first driving mode or the second driving mode, and correspondingly return to the original first driving mode or second driving mode when the instantaneous power demand of the electric vehicle falls back; and
the controller is further configured to determine a battery failure when the remaining electric quantity of the power battery is reduced to a value which is not greater than the minimum pre-set value, and further determine whether the second driving mode is allowed to be selected,
if not allowed, it enters a limp home mode or a parking mode; and
if allowed, the second driving mode is selected;
wherein the maximum pre-set value and the minimum pre-set value are not set to be limit values of charging and discharging of the power battery.

Further, in the first driving mode, the auxiliary energy apparatus is deactivated.

Further, in the second driving mode, the power battery is deactivated to stop outputting electric power.

Further, the remaining electric quantity of the power battery is represented by an SOC value; and the auxiliary energy apparatus is a power follower.

Further, the controller is configured to control the driving mode to alternately switch between the first driving mode and the second driving mode.

Further, the minimum pre-set value indicates that the power battery is substantially in a dead battery state; and
the pre-set nominal value is between the maximum pre-set value and the minimum pre-set value and is close to the minimum pre-set value.

Further, the maximum pre-set value is 80-100%;
the minimum pre-set value is 15-18%;
the pre-set nominal value is 18-25%; and
the pre-set intermediate value is 40-80%.

A second aspect of the present invention refers to a power source switching control method, comprising the following steps:
using a power battery to output electric power as a main energy source to drive a traction motor of the electric vehicle;
using an auxiliary energy apparatus to output electric power as an auxiliary energy source to selectively drive the traction motor of the electric vehicle and/or charge the power battery; and
selecting any one mode to control the operation of the power battery and the auxiliary energy apparatus from multiple driving modes, wherein the multiple driving modes comprise:
   a first driving mode, in which the power battery operates alone to drive the traction motor; and
   a second driving mode, in which the auxiliary energy apparatus operates alone to drive the traction motor and to charge the power battery; and
   wherein, when the remaining electric quantity of the power battery is not greater than a pre-set nominal value and greater than a minimum pre-set value, the second driving mode is selected until the remaining electric quantity of the power battery rises to a value which is not lower than a pre-set intermediate value; and when the remaining electric quantity of the power battery is not lower than the pre-set intermediate value, the first driving mode is selected until the remaining electric quantity of the power battery is reduced to a value which is not greater than the pre-set nominal value and greater than the minimum pre-set value, wherein the power battery has a maximum pre-set value which indicates that the power battery is substantially in a fully charged state, and the pre-set intermediate value is a value which is between the maximum pre-set value and the pre-set nominal value.

According to the invention, the multiple driving modes further comprise:
a third driving mode, in which the power battery and the auxiliary energy apparatus (130) both output electric power to simultaneously drive the traction motor; the method further comprising:
switching to the third driving mode from the second driving mode or the first driving mode to drive the traction motor when an instantaneous power demand of the entire electric vehicle is greater than the quantity of power generation of the auxiliary energy apparatus; and
the method further comprising:
   determining a battery failure when the remaining electric quantity of the power battery is reduced to a value which is not greater than the minimum pre-set value, and further determining whether the second driving mode is allowed to be selected;
   if not allowed, entering a limp home mode or a parking mode; and
   if allowed, selecting the second driving mode;
   wherein the maximum pre-set value and the minimum pre-set value are not set to be limit values of charging and discharging of the power battery.

In the solution of the present invention, the auxiliary energy apparatus may not only charge the battery but also directly drive the motor, which is a prerequisite for selecting any energy source in the present application. Compared with the prior art, the energy source in the present application may be selected between a power battery and an auxiliary energy source. As a result, the power battery and the auxiliary energy source are alternately used, so that the frequency of use of both of them is greatly reduced, so as to prolong the battery life while reduce the fuel consumption and improve the energy-saving performance. Furthermore, the maximum pre-set value and the minimum pre-set value in the present invention are not set to be the limit values of charging and discharging of the power battery, so that the state of charge of the power battery is maintained within a prescribed range so as to prevent the state of charge of the battery from being too high or too low to improve the cycle life of the battery.

According to the solution of the present invention, since the pre-set nominal values are set, the selection process between the different driving modes is made smoother, and there is no lack of power or discomfort due to changes in the driving mode. In addition, due to the addition of the third driving mode, sufficient power can be ensured under special conditions, such as sudden acceleration or climbing a long ramp. The solution of the present invention also considers fault conditions, that is, when the remaining electric quantity of the power battery is reduced to a value which is not greater than the minimum pre-set value, it can be determined that the electric vehicle is in a fault condition, and at this time, it can be determined whether the second driving mode is allowed to be enabled, according to the fault codes of parts of the entire vehicle, including the battery system, in combination with the fault condition; if not allowed, it enters the limp home mode or the parking mode; and if allowed, the second driving mode is selected. This enables the fault condition to be detected in time so as to ensure the normal operation of the electric vehicle.

According to the detailed description of specific embodiments of the invention below in conjunction with the accompanying drawings, the above and other objectives, advantages and features will become more apparent to a person skilled in the art.

### BRIEF DESCRIPTION OF THE DRAWINGS

Some of specific embodiments of the invention will be described below in detail with reference to the accompanying drawings by way of example but not by way of limitation. The same reference signs indicate the same or similar components or parts in the accompanying drawings. It is understood by a person skilled in the art that the accompanying drawings are not necessarily drawn to scale. In the accompanying drawings:
Fig. 1 is a schematic diagram of a control strategy between a power follower and a power battery in the prior art;
Fig. 2 is a general structural block diagram of a power source for an electric vehicle according to one embodiment of the present invention;
Fig. 3 is a schematic diagram of a driving principle of a first driving mode according to one embodiment of the present invention;
Fig. 4 is a schematic diagram of a driving principle of a second driving mode according to one embodiment of the present invention;
Fig. 5 is a schematic diagram of a control strategy for switching between different driving modes according to one embodiment of the present invention;
Fig. 6 is a schematic diagram of a driving principle of a third driving mode according to one embodiment of the present invention;
Fig. 7 is a schematic flow chart of a power source switching control method according to one embodiment of the present invention;
Fig. 8 is a schematic flow chart of a power source switching control method according to another embodiment of the present invention.

### DETAILED DESCRIPTION OF THE INVENTION

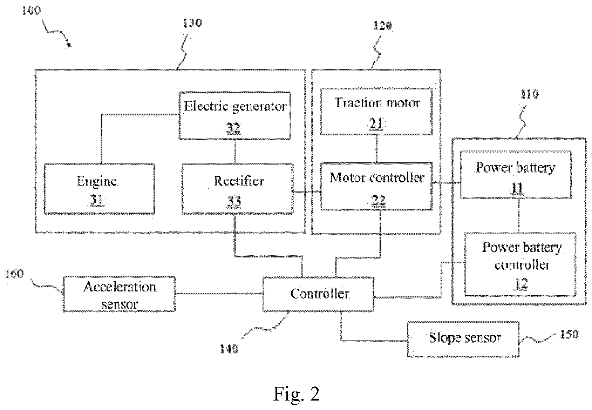

Fig. 2 is a general structural block diagram of a power source 100 for an electric vehicle according to one embodiment of the present invention. As shown in Fig. 2, the power source 100 for an electric vehicle may generally comprise a battery control apparatus 110, a motor control apparatus 120, an auxiliary energy apparatus 130, and a controller 140, which are disposed within the electric vehicle. The battery control apparatus 110 may comprise a power battery 11 and a power battery controller 12 for controlling charging and/or discharging of the power battery 11, the power battery 11 being electrically connected to the power battery controller 12. The motor control apparatus 120 may comprise a traction motor 21 for driving wheels 170 and a motor controller 22 for converting direct current to alternating current, the traction motor 21 being electrically connected to the motor controller 22. The auxiliary energy apparatus 130 comprises an engine 31, an electric generator 32, and a rectifier 33 for converting alternating current into direct current, which are disposed in the electric vehicle, the engine 31 being connected to the electric generator 32, and the electric generator 32 being electrically connected to the rectifier 33. The controller 140 is electrically connected to the rectifier 33, the motor controller 22, and the power battery controller 12 via a CAN (Controller Area Network) bus, respectively. It can be understood that, in order to detect the acceleration of the electric vehicle and the slope of the current road, the power source 100 for the electric vehicle may further comprise an acceleration sensor 160 and a slope sensor 150, the acceleration sensor 160 and the slope sensor 150 being electrically connected to the controller 140, respectively. The auxiliary energy apparatus 130 may directly drive the traction motor 21 or may charge the power battery 11. In one embodiment, the auxiliary energy apparatus 130 may be a power follower. In other embodiments, the auxiliary energy apparatus 130 may be another energy source apparatus capable of charging the power battery 11 while directly driving the traction motor 21. By using the auxiliary energy apparatus 130 and the power battery 11 as energy sources, the power battery 11 can be used as little as possible, thus reducing the cost of the entire energy supply system.

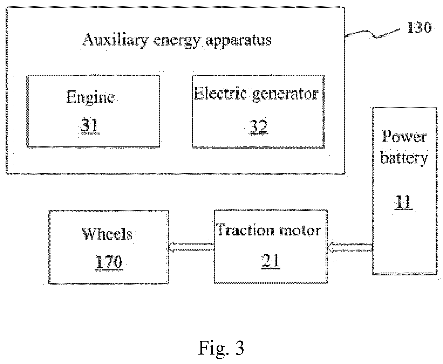

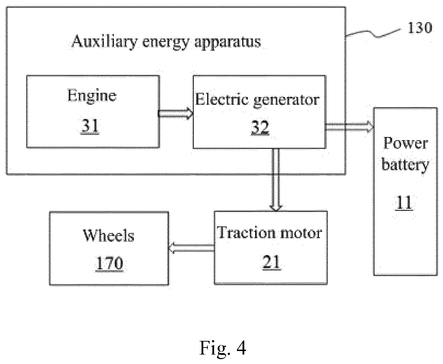

In order to select one of the power battery 11 and the auxiliary energy apparatus 130 as the energy source, in one embodiment, the driving mode in the solution of the present invention may comprise a first driving mode and a second driving mode. Fig. 3 shows a schematic diagram of a driving principle of a first driving mode according to the embodiment, and as shown in Fig. 3, in the first driving mode, the power battery 11 is used as an energy source to drive the traction motor 21 and further drive running of the wheels 170. Fig. 4 shows a schematic diagram of a driving principle of a second driving mode according to the embodiment, and as shown in Fig. 4, in the second driving mode, the auxiliary energy apparatus 130 is used as an auxiliary energy source to drive the traction motor 21 and supply power to the power battery 11. The auxiliary energy apparatus 130 can be configured to preferentially drive the traction motor 21 and then supply power to the power battery 11. The controller 140 is configured to select the second driving mode when the remaining electric quantity of the power battery 11 is not greater than a pre-set nominal value, until the remaining electric quantity of the power battery 11 rises to a value which is not lower than a pre-set intermediate value; and when the remaining electric quantity of the power battery 11 is not lower than the pre-set intermediate value, the first driving mode is selected until the remaining electric quantity of the power battery 11 is reduced to a value which is not greater than the pre-set nominal value, wherein the power battery has a maximum pre-set value which indicates that the power battery is substantially in a fully charged state, and the pre-set intermediate value is a value which is between the maximum pre-set value and the pre-set nominal value. In a specific implementation, the maximum pre-set value is selected as any percentage within 80-100%, the pre-set nominal value is selected as any percentage within 18-25%, and the pre-set intermediate value is selected as any percentage within 40-80%. The remaining electric quantity can be represented by the SOC value, but is not limited thereby. The "SOC" described herein is an abbreviation of "State of Charge", which indicates the state of charge, and can also be understood as the state of battery power. In the solution of the present application, when the battery is fully charged, the driving energy source for the entire vehicle is provided by the power battery 11; when the battery power is reduced to a certain value, the driving energy source for the entire vehicle is provided by the auxiliary energy apparatus 130; when the battery power rises to the pre-set intermediate value due to the charging of the auxiliary energy apparatus 130, the driving energy source for the entire vehicle is provided by the power battery 11 instead; and when the entire vehicle is in a special condition, such as climbing a long ramp and/or sudden acceleration, the driving energy source for the entire vehicle is jointly provided by the power battery 11 and the auxiliary energy apparatus 130. Since the auxiliary energy apparatus 130 also charges the power battery 11 while driving the traction motor 21, the remaining electric quantity of the power battery 11 has a low-to-high charging process, and once the power battery 11 is used, the electric quantity of the power battery 11 has a high-to-low discharge process, thereby switching the energy source between different driving modes.

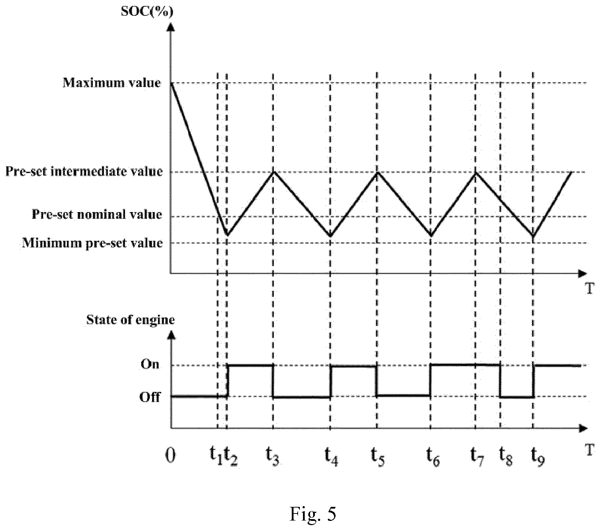

Fig. 5 is a schematic diagram of a control strategy for switching between different driving modes according to one embodiment of the present invention. As shown in Fig. 5, the controller 140 is configured to alternately switch between the first driving mode and the second driving mode according to a change in the remaining electric quantity of the power battery 11. When the SOC value of the power battery 11 is greater than the minimum pre-set value and not greater than the nominal value, the controller 140 sends a start instruction to the engine 31. When the engine 31 is started, the current driving mode is the second driving mode. In general, the electric vehicle further comprises an energy management control apparatus for detecting the SOC value of the power battery 11 and processing the SOC value to send an instruction to the controller 140. Therefore, the process by which the engine 31 receives a start instruction is: when the energy management control apparatus detects that the SOC value of the power battery 11 is greater than the minimum pre-set value and not greater than the nominal value, the controller 140 sends to the engine 31 an instruction for starting the engine 31, and once the engine 31 is started, the power battery 11 will be automatically deactivated. That is, the switching time for switching from the first driving mode to the second driving mode is short, so that the switching process is smooth, avoiding the lack of power or discomfort due to the switching of the driving mode. Furthermore, the maximum pre-set value and the minimum pre-set value in the present invention are not set to be the limit values of charging and discharging of the power battery 11, so that the state of charge of the power battery 11 is maintained within a prescribed range so as to prevent the state of charge of the power battery 11 from being too high or too low to improve the cycle life of the battery.

In the solution of the present invention, since the auxiliary energy apparatus 130 is used as the auxiliary energy source, not only the power battery 11 can be charged, but also the traction motor 21 can be directly driven, which is a prerequisite for selecting any energy source in the present application. Compared with the prior art, the energy source in the present application may be alternately switched between the power battery 11 and the auxiliary energy apparatus 130. As a result, the frequency of use of the power battery 11 and the auxiliary energy 130 is greatly reduced, so as to prolong the service life of the power battery 11 while reduce the fuel consumption and improve the energy-saving performance.

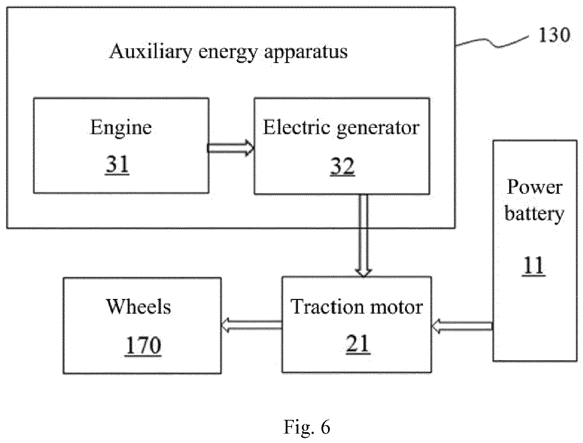

During the driving of the vehicle, some special conditions, such as climbing a long ramp and/or sudden acceleration, may not be avoided, and therefore in order to satisfy the power performance under the special conditions, the driving mode may further comprise a third driving mode. Fig. 6 shows a schematic diagram of a driving principle of a third driving mode according to the embodiment, and as shown in Fig. 6, in the third driving mode, the power battery 11 and the auxiliary energy apparatus 130 are both used as energy sources to drive the traction motor 21. It should be noted that all the conditions that the power demands of the entire vehicle cannot be satisfied when the driving mode is the first driving mode or the second driving mode can be taken as special conditions. The special conditions may comprise a condition of climbing a long ramp and a sudden acceleration condition. The condition of climbing a long ramp is a condition when a slope sensor 150 detects that the slope of a road in the travelling direction is greater than a pre-set slope value and the period of time when the slope is greater than the pre-set slope value exceeds a pre-set time, or is a condition when an acceleration sensor 160 detects that the acceleration change rate of the electric vehicle is greater than a pre-set value and the period of time when the acceleration change rate is greater than the pre-set value exceeds a certain time. The sudden acceleration condition is a condition when the acceleration sensor 160 detects that the acceleration change rate of the electric vehicle is greater than a pre-set value. The slope sensor 150 is used to detect a road slope at every moment in the travelling direction of the electric vehicle, and compare the slope data with the pre-set slope value, and when the slope data is greater than the pre-set slope value, the calculation for the period of time when the slope data is greater than the pre-set slope value is started. The acceleration sensor 160 is used to detect the acceleration of the electric vehicle at every moment, calculate the acceleration change rate at every moment, compare the acceleration change rate with the pre-set value, and, when the acceleration change rate is greater than the pre-set value, calculate the period of time when the acceleration change rate is greater than the pre-set value. In addition, the controller 140 is configured to, when the special condition is eliminated, switch the driving mode from the third driving mode to the driving mode before the occurrence of the condition of climbing a long ramp and/or the sudden acceleration condition.

Fig. 5 shows a schematic diagram of switching the energy source of an electric vehicle between different driving modes according to one embodiment, and at the same time, shows a schematic diagram of switching the driving modes under special conditions. As shown in Fig. 5, when T = 0, the remaining electric quantity of the power battery 11 is at the maximum value, and the remaining electric quantity of the power battery 11 is gradually reduced with the consumption of the electric quantity of the power battery 11; when T = t₁, the remaining electric quantity of the power battery 11 is at a pre-set nominal value, and the engine 31 is in a to-be-started state; and when T = t₂, the remaining electric quantity of the power battery 11 is between the pre-set nominal value and the minimum pre-set value, and the engine 31 is started. Therefore, during the time 0 to t₂, the driving mode is the first driving mode, during the time t₂ to t₃, the driving mode is the second driving mode, and the alternating cycle between the first driving mode and the second driving mode is started hereafter. That is, during the time t₃ to t₄ and the time t₅ to t₆, the driving mode is the first driving mode, and during the time t₄ to t₅ and the time t₆ to t₇, the driving mode is the second driving mode. Since the electric vehicle is in a special condition, it is required to satisfy the power performance of the entire vehicle. Therefore, during the time t₇ to t₈, the driving mode is the third driving mode, that is, the power battery 11 and the auxiliary energy apparatus 130 are simultaneously used as the energy sources to drive the motor 21. Once the special condition disappears, the driving mode becomes the driving mode that the vehicle has before the special condition occurs, that is, during the time t₈ to t₉, the driving mode is the first driving mode.

In order to ensure the safety during the driving of the electric vehicle, when the SOC value of the power battery 11 is less than the minimum pre-set value, it is necessary to check whether the electric vehicle has a fault. This is because when the SOC value of the power battery 11 reaches the minimum value, the auxiliary energy apparatus 130 charges the power battery 11, and under normal conditions, the case where the SOC value of the power battery 11 is less than the minimum pre-set value does not occur. In the solution of the present invention, the energy management control apparatus is configured to, when the SOC value of the power battery 11 is less than the minimum pre-set value, determine that the electric vehicle is in a fault condition, and determine whether the auxiliary energy apparatus 130 is allowed to be in a start-up state, according to the fault codes of various parts of the entire vehicle, including the battery system, in combination with the fault condition. If not allowed, an instruction to enter a limp home mode or a parking mode is sent to the controller 140, waiting for the rescue. If allowed, an instruction to switch the driving mode to the second driving mode is sent to the controller 140, indicating that the electric vehicle is in a normal condition, and the auxiliary energy apparatus 130 can drive the running of the vehicle and charge the power battery 11.

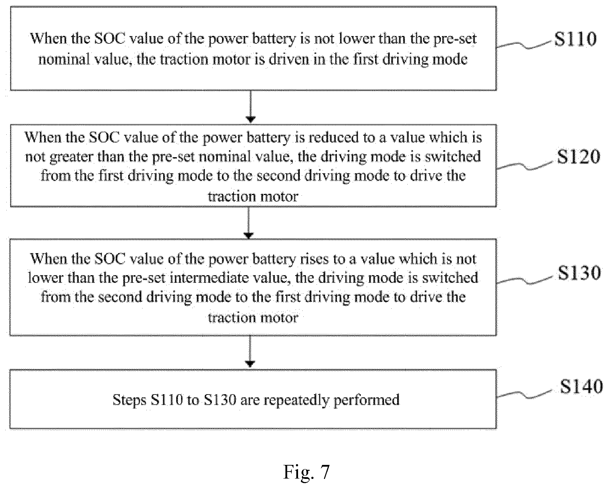

Fig. 7 shows a schematic flow chart of a power source switching control method according to one embodiment of the present invention. As shown in Fig. 7, the method may comprise the following steps:
S110, when the SOC value of the power battery is not lower than the pre-set nominal value, the traction motor is driven in the first driving mode;
S120, when the SOC value of the power battery is reduced to a value which is not greater than the pre-set nominal value, the driving mode is switched from the first driving mode to the second driving mode to drive the traction motor;
S130, when the SOC value of the power battery rises to a value which is not lower than the pre-set intermediate value, the driving mode is switched from the second driving mode to the first driving mode to drive the traction motor; and
S140, steps S110 to S130 are repeatedly performed.

The driving mode is alternately switched between the first driving mode and the second driving mode; and
the pre-set nominal value is selected as any percentage within 18-25%, and the pre-set intermediate value is selected as any percentage within 40-80%.

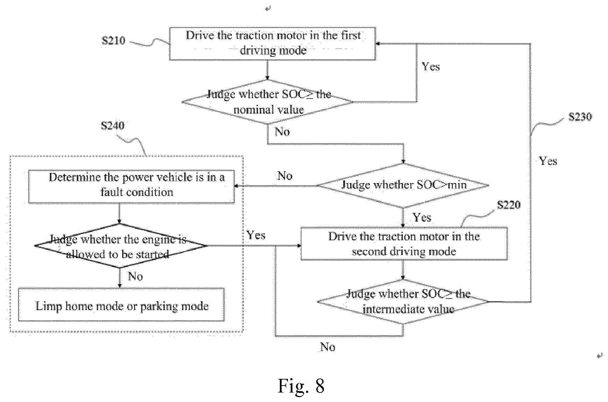

Fig. 8 shows a schematic flow chart of a power source switching control method of another embodiment of the present invention. In a specific implementation, it is possible to encounter a fault condition. In another embodiment, as shown in Fig. 8, the power source switching control method of the present invention may comprise the following steps:
S210, when the SOC value of the power battery is not lower than the pre-set nominal value, that is, when the SOC ≥ the nominal value (the default is SOC ≤ max), the traction motor is driven in the first driving mode;
S220, when the SOC value of the power battery is reduced to a value which is less than the pre-set nominal value, that is, the SOC < the nominal value, the driving mode is switched from the first driving mode to the second driving mode to drive the traction motor;
S230, when the SOC value of the power battery rises to a value which is not lower than the pre-set intermediate value, that is, the SOC ≥ the intermediate value, the driving mode is switched from the second driving mode to the first driving mode to drive the traction motor; and
S240, when the SOC value of the power battery is reduced to a value which is not greater than the minimum pre-set value (min), that is, the SOC ≤ min, it is checked whether the electric vehicle is in a fault condition.

If it is in a fault condition, it enters the limp home mode or the parking mode, waiting for rescue;

If it is not in a fault condition, the second driving mode is selected.

When the fault condition is eliminated or the fault condition does not occur, the method further repeats steps S210 to S230.

Further, in a specific implementation, it is possible to encounter a special condition, for example, climbing a long ramp and/or sudden acceleration. In another embodiment, the power source switching control method of the present invention may comprise the following steps (not shown in the figures):
S310, when the SOC value of the power battery is not lower than the pre-set nominal value, that is, when the SOC ≥ the nominal value (the default is SOC ≤ max), the traction motor is driven in the first driving mode;
S320, when the SOC value of the power battery is reduced to a value which is less than the pre-set nominal value, that is, the SOC < the nominal value, the driving mode is switched from the first driving mode to the second driving mode to drive the traction motor;
S330, when it rises to a value which is not lower than the pre-set intermediate value, that is, the SOC ≥ the intermediate value, the driving mode is switched from the second driving mode to the first driving mode to drive the traction motor;
S340, steps S310 to S330 are repeatedly performed; and
S350, when the instantaneous power demand of the entire vehicle is greater than the quantity of power generation of the auxiliary energy apparatus, the driving mode is switched from the second driving mode or the first driving mode to the third driving mode to drive the motor.

Other features of the method of the present invention correspond to the above system features one-to-one and will not be described herein again.

To this end, it is recognized by a person skilled in the art that although multiple exemplary embodiments of the present invention have been shown and described in detail herein, many other variations or modifications Z falling within the scope of the present invention can be directly determined or derived from the contents disclosed in the present invention as defined by the appended claims.

## Claims

1. A power source (100) for an electric vehicle, the power source comprising:
a power battery (11) used to output electric power as a main energy source to drive a traction motor (21) of the electric vehicle;
an auxiliary energy apparatus (130) used to output electric power as an auxiliary energy source to selectively drive the traction motor (21) of the electric vehicle and/or charge the power battery (11); and
a controller (140) used to select any one mode to control the operation of the power battery (11) and the auxiliary energy apparatus from multiple driving modes, wherein the multiple driving modes comprise:
a first driving mode, in which the power battery (11) operates alone to drive the traction motor (21); and
a second driving mode, in which the auxiliary energy apparatus (130) operates alone to drive the traction motor (21) and to charge the power battery (11); and
wherein the controller (140) is configured to: select, when the remaining electric quantity of the power battery (11) is not greater than a pre-set nominal value and greater than a minimum pre-set value, the second driving mode until the remaining electric quantity of the power battery (11) rises to a value which is not lower than a pre-set intermediate value; and select, when the remaining electric quantity of the power battery (11) is not lower than the pre-set intermediate value, the first driving mode until the remaining electric quantity of the power battery (11) is reduced to a value which is not greater than the pre-set nominal value and greater than the minimum pre-set value, wherein the power battery (11) has a maximum pre-set value which indicates that the power battery (11) is substantially in a fully charged state, and the pre-set intermediate value is a value which is between the maximum pre-set value and the pre-set nominal value,
**characterized in that** the multiple driving modes further comprise:
a third driving mode, in which the power battery (11) and the auxiliary energy apparatus (130) both output electric power to simultaneously drive the traction motor (21);
wherein the controller (140) is configured to select the third driving mode when the instantaneous power demand of the electric vehicle cannot be satisfied when the current driving mode is the first driving mode or the second driving mode, and correspondingly return to the original first driving mode or second driving mode when the instantaneous power demand of the electric vehicle falls back; and
the controller (140) is further configured to determine a battery failure when the remaining electric quantity of the power battery (11) is reduced to a value which is not greater than the minimum pre-set value, and further determine whether the second driving mode is allowed to be selected,
if not allowed, it enters a limp home mode or a parking mode; and
if allowed, the second driving mode is selected;
wherein the maximum pre-set value and the minimum pre-set value are not set to be limit values of charging and discharging of the power battery (11).

2. The power source (100) according to claim 1, wherein, in the first driving mode, the auxiliary energy apparatus (130) is deactivated.

3. The power source (100) according to claim 1 or 2, wherein, in the second driving mode, the power battery (11) is deactivated to stop outputting electric power.

4. The power source (100) according to any one of claims 1 to 3, wherein the remaining electric quantity of the power battery is represented by an SOC value; and
the auxiliary energy apparatus (130) is a power follower.

5. The power source (100) according to claim 4, wherein the controller (140) is configured to control the driving mode to alternately switch between the first driving mode and the second driving mode.

6. The power source (100) according to any of claims 1 to 5, wherein the minimum pre-set value indicates that the power battery (11) is in a dead battery state; and
the pre-set nominal value is between the maximum pre-set value and the minimum pre-set value and is close to the minimum pre-set value.

7. The power source (100) according to claim 6, wherein the maximum pre-set value is 80-100%;
the minimum pre-set value is 15-18%;
the pre-set nominal value is 18-25%; and
the pre-set intermediate value is 40-80%.

8. A power source selection method, comprising the following steps:
using a power battery (11) to output electric power as a main energy source to drive a traction motor (21) of an electric vehicle;
using an auxiliary energy apparatus (130) to output electric power as an auxiliary energy source to selectively drive the traction motor (21) of the electric vehicle and/or charge the power battery (11); and
selecting any one mode to control the operation of the power battery (11) and the auxiliary energy apparatus (130) from multiple driving modes, wherein the multiple driving modes comprise:
a first driving mode, in which the power battery (11) operates alone to drive the traction motor (21); and
a second driving mode, in which the auxiliary energy apparatus (130) operates alone to drive the traction motor (21) and to charge the power battery (11); and
wherein, when the remaining electric quantity (SOC) of the power battery (11) is not greater than a pre-set nominal value and greater than a minimum pre-set value, the second driving mode is selected until the remaining electric quantity (SOC) of the power battery (11) rises to a value which is not lower than a pre-set intermediate value; and when the remaining electric quantity (SOC) of the power battery (11) is not lower than the pre-set intermediate value, the first driving mode is selected until the remaining electric quantity (SOC) of the power battery (11) is reduced to a value which is not greater than the pre-set nominal value and greater than the minimum pre-set value, wherein the power battery (11) has a maximum pre-set value which indicates that the power battery (11) is substantially in a fully charged state, and the pre-set intermediate value is a value which is between the maximum pre-set value and the pre-set nominal value,
**characterized in that** the multiple driving modes further comprise:
a third driving mode, in which the power battery (11) and the auxiliary energy apparatus (130) both output electric power to simultaneously drive the traction motor (21);
the method further comprising:
switching to the third driving mode from the second driving mode or the first driving mode to drive the traction motor (21) when an instantaneous power demand of the entire electric vehicle is greater than the quantity of power generation of the auxiliary energy apparatus (130); and
the method further comprising:
determining a battery failure when the remaining electric quantity of the power battery (11) is reduced to a value which is not greater than the minimum pre-set value, and further determining whether the second driving mode is allowed to be selected;
if not allowed, entering a limp home mode or a parking mode; and
if allowed, selecting the second driving mode;
wherein the maximum pre-set value and the minimum pre-set value are not set to be limit values of charging and discharging of the power battery (11).

## Patentansprüche

1. Stromquelle (100) für ein Elektrofahrzeug, wobei die Stromquelle Folgendes umfasst:
eine Strombatterie (11), die verwendet wird, um elektrischen Strom abzugeben, als eine Hauptenergiequelle zum Antreiben eines Traktionsmotors (21) des Elektrofahrzeugs;
eine Hilfeenergievorrichtung (130), die verwendet wird um elektrischen Strom abzugeben, als eine Hilfeenergiequelle, um wahlweise den Traktionsmotor (21) des Elektrofahrzeugs anzutreiben und/oder die Strombatterie (11) aufzuladen; und
eine Steuerung (140), die verwendet wird, um einen Modus zur Steuerung des Betriebs der Strombatterie (11) und der Hilfeenergievorrichtung aus mehreren Antriebsmodi auszuwählen, wobei die mehreren Antriebsmodi folgende umfassen:
einen ersten Antriebsmodus, in dem die Strombatterie (11) allein betrieben wird, um den Traktionsmotor (21) anzutreiben; und
einen zweiten Antriebsmodus, in dem die Hilfsenergievorrichtung (130) allein betrieben wird, um den Traktionsmotor (21) anzutreiben und die Strombatterie (11) aufzuladen; und
wobei die Steuerung (140) für Folgendes ausgestaltet ist: Auswählen, wenn die Restladung der Strombatterie (11) nicht größer ist als ein voreingestellter Nennwert und größer als ein minimaler voreingestellter Wert ist, des zweiten Antriebsmodus, bis die Restladung der Strombatterie (11) auf einen Wert steigt, der nicht geringer ist als ein voreingestellter Zwischenwert; und Auswählen, wenn die verbleibende Restladung der Strombatterie (11) nicht geringer ist als der voreingestellte Zwischenwert, des ersten Antriebsmodus, bis die verbleibende Restladung der Strombatterie (11) auf einen Wert reduziert ist, der nicht größer ist als der voreingestellte Nennwert und größer ist als der minimale voreingestellte Wert, wobei die Strombatterie (11) einen maximalen voreingestellten Wert aufweist, der angibt, dass die Strombatterie (11) sich im Wesentlichen in einem vollständig aufgeladenen Zustand befindet, und der voreingestellte Zwischenwert ein Wert ist, der zwischen dem maximalen voreingestellten Wert und dem voreingestellten Nennwert liegt,
**dadurch gekennzeichnet, dass** die mehreren Antriebsmodi fernerfolgenden umfassen:
einen dritten Antriebsmodus, in dem die Strombatterie (11) und die Hilfsenergievorrichtung (130) beide elektrischen Strom ausgeben, um den Traktionsmotor (21) gleichzeitig anzutreiben;
wobei die Steuerung (140) ausgestaltet ist, um den dritten Antriebsmodus auszuwählen, wenn der momentane Strombedarf des Elektrofahrzeugs nicht gedeckt werden kann, wenn der aktuelle Antriebsmodus der erste Antriebsmodus oder der zweite Antriebsmodus ist, und entsprechend zu dem ursprünglichen ersten Antriebsmodus oder zweiten Antriebsmodus zurückzukehren, wenn der momentane Strombedarf des Elektrofahrzeugs zurückgeht; und
die Steuerung (140) ferner ausgestaltet ist, um einen Batterieausfall zu bestimmen, wenn die verbleibende Restladung der Strombatterie (11) auf einen Wert reduziert ist, der nicht größer ist als der minimale voreingestellte Wert, und ferner zu bestimmen, ob der zweite Antriebsmodus ausgewählt werden darf,
falls er nicht ausgewählt werden darf, ein Notbetriebsmodus oder ein Parkmodus eingeschaltet wird; und
falls er ausgewählt werden darf, der zweite Antriebsmodus ausgewählt wird;
wobei der maximale voreingestellte Wert und der minimale voreingestellte Wert nicht eingestellt sind, um Grenzwerte zum Aufladen und Entladen der Strombatterie (11) zu sein.

2. Stromquelle (100) nach Anspruch 1, wobei in dem ersten Antriebsmodus die Hilfsenergievorrichtung (130) deaktiviert wird.

3. Stromquelle (100) nach Anspruch 1 oder 2, wobei in dem zweiten Antriebsmodus die Strombatterie (11) deaktiviert wird, um die Abgabe von elektrischem Strom zu stoppen.

4. Stromquelle (100) nach einem der Ansprüche 1 bis 3, wobei die Restladung der Strombatterie durch einen SOC-Wert dargestellt wird; und
die Hilfsenergievorrichtung (130) ein Power Follower ist.

5. Stromquelle (100) nach Anspruch 4, wobei die Steuerung (140) dazu ausgestaltet ist, den Antriebsmodus so zu steuern, das abwechselnd zwischen dem ersten Antriebsmodus und dem zweiten Antriebsmodus umgeschaltet wird.

6. Stromquelle (100) nach einem der Ansprüche 1 bis 5, wobei der minimale voreingestellte Wert angibt, dass die Strombatterie (11) sich in einem leeren Batteriezustand befindet; und
der voreingestellte Nennwert zwischen dem maximalen voreingestellten Wert und dem minimalen voreingestellten Wert und nahe dem minimalen voreingestellten Wert liegt.

7. Stromquelle (100) nach Anspruch 6, wobei der maximale voreingestellte Wert 80-100 % beträgt;
der minimale voreingestellte Wert 15-18 % beträgt;
der voreingestellte Nennwert 18-25 % beträgt; und
der voreingestellte Zwischenwert 40-80 % beträgt.

8. Stromquellenauswahlverfahren, umfassend die folgenden Schritte:
Verwenden einer Strombatterie (11), um elektrischen Strom abzugeben, als eine Hauptenergiequelle zum Antreiben eines Traktionsmotors (21) eines Elektrofahrzeugs;
Verwenden einer Hilfsenergievorrichtung (130), um elektrischen Strom abzugeben, als eine Hilfsenergiequelle, um wahlweise den Traktionsmotor (21) des Elektrofahrzeugs anzutreiben und/oder die Strombatterie (11) aufzuladen; und
Auswählen eines Modus zur Steuerung des Betriebs der Strombatterie (11) und der Hilfsenergievorrichtung (130) aus mehreren Antriebsmodi, wobei die mehreren Antriebsmodi folgende umfassen:
einen ersten Antriebsmodus, in dem die Strombatterie (11) allein betrieben wird, um den Traktionsmotor (21) anzutreiben; und
einen zweiten Antriebsmodus, in dem die Hilfsenergievorrichtung (130) allein betrieben wird, um den Traktionsmotor (21) anzutreiben und die Strombatterie (11) aufzuladen; und
wobei, wenn die Restladung (SOC) der Strombatterie (11) nicht größer ist als ein voreingestellter Nennwert und größer als ein minimaler voreingestellter Wert ist, der zweite Antriebsmodus ausgewählt wird, bis die Restladung (SOC) der Strombatterie (11) auf einen Wert steigt, der nicht geringer ist als ein voreingestellter Zwischenwert; und wenn die Restladung (SOC) der Strombatterie (11) nicht geringer ist als ein voreingestellter Zwischenwert, der erste Antriebsmodus ausgewählt wird, bis die Restladung (SOC) der Strombatterie (11) auf einen Wert reduziert ist, der nicht größer ist als der voreingestellte Nennwert und größer ist als der minimale voreingestellte Wert, wobei die Strombatterie (11) einen maximalen voreingestellten Wert aufweist, der angibt, dass die Strombatterie (11) sich im Wesentlichen in einem vollständig aufgeladenen Zustand befindet, und der voreingestellte Zwischenwert ein Wert ist, der zwischen dem maximalen voreingestellten Wert und dem voreingestellten Nennwert liegt,
**dadurch gekennzeichnet, dass** die mehreren Antriebsmodi fernerfolgenden umfassen:
einen dritten Antriebsmodus, in dem die Strombatterie (11) und die Hilfsenergievorrichtung (130) beide elektrischen Strom ausgeben, um den Traktionsmotor (21) gleichzeitig anzutreiben;
wobei das Verfahren ferner Folgendes umfasst:
Umschalten in den dritten Antriebsmodus aus dem zweiten Antriebsmodus oder dem ersten Antriebsmodus, um den Traktionsmotor (21) anzutreiben, wenn ein momentaner Strombedarf des gesamten Elektrofahrzeugs größer ist als das Maß der Stromerzeugung der Hilfsenergievorrichtung (130); und
wobei das Verfahren ferner Folgendes umfasst:
Bestimmen eines Batterieausfalls, wenn die Restladung der Strombatterie (11) auf einen Wert reduziert ist, der nicht größer ist als der minimale voreingestellte Wert, und ferner Bestimmen, ob der zweite Antriebsmodus ausgewählt werden darf;
falls er nicht ausgewählt werden darf, Einschalten eines Notbetriebsmodus oder eines Parkmodus; und
falls er ausgewählt werden darf, Auswählen des zweiten Antriebsmodus;
wobei der maximale voreingestellte Wert und der minimale voreingestellte Wert nicht eingestellt sind, um Grenzwerte zum Aufladen und Entladen der Strombatterie (11) zu sein.

## Revendications

1. Source d'alimentation (100) pour un véhicule électrique, la source d'alimentation comprenant :
une batterie d'alimentation (11) utilisée pour délivrer de l'énergie électrique comme source d'énergie principale afin d'entraîner un moteur de traction (21) du véhicule électrique ;
un appareil d'énergie auxiliaire (130) utilisé pour délivrer de l'énergie électrique comme source d'énergie auxiliaire pour, de manière sélective, entraîner le moteur de traction (21) du véhicule électrique et/ou charger la batterie d'alimentation (11) ; et
un dispositif de commande (140) utilisé pour sélectionner un mode pour commander le fonctionnement de la batterie d'alimentation (11) et de l'appareil d'énergie auxiliaire parmi plusieurs modes d'entraînement,
dans laquelle les plusieurs modes d'entraînement comprennent :
un premier mode d'entraînement, dans lequel la batterie d'alimentation (11) fonctionne seule pour entraîner le moteur de traction (21) ; et
un deuxième mode d'entraînement, dans lequel l'appareil d'énergie auxiliaire (130) fonctionne seul pour entraîner le moteur de traction (21) et pour charger la batterie d'alimentation (11) ; et
dans laquelle le dispositif de commande (140) est configuré pour : quand la quantité d'électricité restante de la batterie d'alimentation (11) n'est pas supérieure à une valeur nominale préréglée et est supérieure à une valeur préréglée minimale, sélectionner le deuxième mode d'entraînement jusqu'à ce que la quantité d'électricité restante de la batterie d'alimentation (11) augmente à une valeur qui n'est pas inférieure à une valeur intermédiaire préréglée ; et, quand la quantité d'électricité restante de la batterie d'alimentation (11) n'est pas inférieure à la valeur intermédiaire préréglée, sélectionner le premier mode d'entraînement jusqu'à ce que la quantité d'électricité restante de la batterie d'alimentation (11) soit réduite à une valeur qui n'est pas supérieure à la valeur nominale préréglée et est supérieure à la valeur préréglée minimale, la batterie d'alimentation (11) présentant une valeur préréglée maximale qui indique que la batterie d'alimentation (11) est sensiblement dans un état complètement chargé, et la valeur intermédiaire préréglée est une valeur qui est située entre la valeur préréglée maximale et la valeur nominale préréglée,
**caractérisée en ce que** les plusieurs modes d'entraînement comprennent en outre :
un troisième mode d'entraînement, dans lequel la batterie d'alimentation (11) et l'appareil d'énergie auxiliaire (130) délivrent tous les deux de l'énergie électrique pour entraîner simultanément le moteur de traction (21) ;
dans laquelle le dispositif de commande (140) est configuré pour sélectionner le troisième mode d'entraînement quand la demande en énergie instantanée du véhicule électrique ne peut pas être satisfaite quand le mode d'entraînement actuel est le premier mode d'entraînement ou le deuxième mode d'entraînement, et revenir de manière correspondante au premier mode d'entraînement ou au deuxième mode d'entraînement d'origine quand la demande en énergie instantanée du véhicule électrique retombe ; et
le dispositif de commande (140) est en outre configuré pour déterminer une défaillance de batterie quand la quantité d'électricité restante de la batterie d'alimentation (11) est réduite à une valeur qui n'est pas supérieure à la valeur préréglée minimale et déterminer en outre si le deuxième mode d'entraînement peut être sélectionné,
s'il ne le peut pas, il entre dans un mode de secours ou un mode de stationnement ; et
s'il le peut, le deuxième mode d'entraînement est sélectionné ;
dans laquelle la valeur préréglée maximale et la valeur préréglée minimale ne sont pas réglées pour être des valeurs limites de charge et de décharge de la batterie d'alimentation (11).

2. Source d'alimentation (100) selon la revendication 1, dans laquelle, dans le premier mode d'entraînement, l'appareil d'énergie auxiliaire (130) est désactivé.

3. Source d'alimentation (100) selon la revendication 1 ou 2, dans laquelle, dans le deuxième mode d'entraînement, la batterie d'alimentation (11) est désactivée pour arrêter de délivrer de l'énergie électrique.

4. Source d'alimentation (100) selon une des revendications 1 à 3, dans laquelle la quantité d'électricité restante de la batterie d'alimentation est représentée par une valeur de SOC ; et
l'appareil d'énergie auxiliaire (130) est un Power Follower.

5. Source d'alimentation (100) selon la revendication 4, dans laquelle le dispositif de commande (140) est configuré pour commander le mode d'entraînement afin qu'il commute en alternance entre le premier mode d'entraînement et le deuxième mode d'entraînement.

6. Source d'alimentation (100) selon une des revendications 1 à 5, dans laquelle la valeur préréglée minimale indique que la batterie d'alimentation (11) est dans un état de batterie à plat ;
et
la valeur nominale préréglée est située entre la valeur préréglée maximale et la valeur préréglée minimale et est proche de la valeur préréglée minimale.

7. Source d'alimentation (100) selon la revendication 6, dans laquelle la valeur préréglée maximale est de 80 à 100 % ;
la valeur préréglée minimale est de 15 à 18 % ;
la valeur nominale préréglée est de 18 à 25 % ; et
la valeur intermédiaire préréglée est de 40 à 80 %.

8. Procédé de sélection de source d'alimentation, comprenant les étapes suivantes :
utilisation d'une batterie d'alimentation (11) pour délivrer de l'énergie électrique comme source d'énergie principale afin d'entraîner un moteur de traction (21) d'un véhicule électrique ;
utilisation d'un appareil d'énergie auxiliaire (130) pour délivrer de l'énergie électrique comme source d'énergie auxiliaire pour, de manière sélective, entraîner le moteur de traction (21) du véhicule électrique et/ou charger la batterie d'alimentation (11) ; et
sélection d'un mode pour commander le fonctionnement de la batterie d'alimentation (11) et de l'appareil d'énergie auxiliaire (130) parmi plusieurs modes d'entraînement, les plusieurs modes d'entraînement comprenant :
un premier mode d'entraînement, dans lequel la batterie d'alimentation (11) fonctionne seule pour entraîner le moteur de traction (21) ; et
un deuxième mode d'entraînement, dans lequel l'appareil d'énergie auxiliaire (130) fonctionne seul pour entraîner le moteur de traction (21) et pour charger la batterie d'alimentation (11) ; et
dans lequel, quand la quantité électrique restante (SOC) de la batterie d'alimentation (11) n'est pas supérieure à une valeur nominale préréglée et est supérieure à une valeur préréglée minimale, le deuxième mode d'entraînement est sélectionné jusqu'à ce que la quantité électrique restante (SOC) de la batterie d'alimentation (11) augmente à une valeur qui n'est pas inférieure à une valeur intermédiaire préréglée ; et, quand la quantité électrique restante (SOC) de la batterie d'alimentation (11) n'est pas inférieure à la valeur intermédiaire préréglée, le premier mode d'entraînement est sélectionné jusqu'à ce que la quantité d'électricité restante (SOC) de la batterie d'alimentation (11) soit réduite à une valeur qui n'est pas supérieure à la valeur nominale préréglée et est supérieure à la valeur préréglée minimale, la batterie d'alimentation (11) présentant une valeur préréglée maximale qui indique que la batterie d'alimentation (11) est sensiblement dans un état complètement chargé, et la valeur intermédiaire préréglée est une valeur qui est située entre la valeur préréglée maximale et la valeur nominale préréglée,
**caractérisé en ce que** les plusieurs modes d'entraînement comprennent en outre :
un troisième mode d'entraînement, dans lequel la batterie d'alimentation (11) et l'appareil d'énergie auxiliaire (130) délivrent tous les deux de l'énergie électrique pour entraîner simultanément le moteur de traction (21) ;
le procédé comprenant en outre :
la commutation dans le troisième mode d'entraînement à partir du deuxième mode d'entraînement ou du premier mode d'entraînement pour entraîner le moteur de traction (21) quand une demande en énergie instantanée du véhicule électrique entier est supérieure à la quantité de puissance générée de l'appareil d'énergie auxiliaire (130) ; et
le procédé comprenant en outre : la détermination d'une défaillance de batterie quand la quantité d'électricité restante de la batterie d'alimentation (11) est réduite à une valeur qui n'est pas supérieure à la valeur préréglée minimale et en outre la détermination si le deuxième mode d'entraînement peut être sélectionné ;
s'il ne le peut pas, le passage dans un mode de secours ou un mode de stationnement ; et
s'il le peut, la sélection du deuxième mode d'entraînement ;
dans lequel la valeur préréglée maximale et la valeur préréglée minimale ne sont pas réglées pour être des valeurs limites de charge et de décharge de la batterie d'alimentation (11).
